# EUROPEAN PATENT SPECIFICATION

(11) **EP 0 846 932 B1**
(45) Date of publication and mention of the grant of the patent: **18.02.2009**
(21) Application number: 98101571.2
(22) Date of filing: 28.10.1994
(51) Int. Cl.: G01B 7/34, G02B 21/00

(54) **Scanning near-field optic/atomic force microscope**
Optisches Nahfeld- und Atomkraft-Rastermikroskop
Microscope de balayage optique de champs proches/à force atomique

(30) Priority: 05.11.1993 JP 27670893
(43) Date of publication of application: 10.06.1998
(62) Divisional of application: 94117120.9
(73) Proprietor: SII NanoTechnology Inc., Chiba-shi, Chiba (JP)
(72) Inventor: Chiba, Norio, Mihama-ku, Chiba-shi, Chiba 261 (JP); Muramatsu, Hiroshi, Mihama-ku, Chiba-shi, Chiba 261 (JP)
(74) Representative: Neugebauer, Jürgen

(56) References cited:
- EP-A- 0 394 962
- EP-A- 0 536 827
- HULST VAN N F ET AL: "OPERATION OF A SCANNING NEAR FIELD OPTICAL MICROSCOPE IN REFLECTIONIN COMBINATION WITH A SCANNING FORCE MICROSCOPE" SPIE, vol. 1639, 1992, pages 36-43, XP002921963
- TOLEDO-CROW R ET AL: "NEAR-FIELD DIFFERENTIAL SCANNING OPTICAL MICROSCOPE WITH ATOMIC FORCE REGULATION" APPLIED PHYSICS LETTERS,US,AMERICAN INSTITUTE OF PHYSICS. NEW YORK, vol. 60, no. 24, 15 June 1992 (1992-06-15), pages 2957-2959, XP000269908 ISSN: 0003-6951
- SHMUEL SHALOM ET AL: "A MICROPIPETTE FORCE PROBE SUITABLE FOR NEAR-FIELD SCANNING OPTICAL MICROSCOPY" REVIEW OF SCIENTIFIC INSTRUMENTS,US,AMERICAN INSTITUTE OF PHYSICS. NEW YORK, vol. 63, no. 9, 1 September 1992 (1992-09-01), pages 4061-4065, XP000311659 ISSN: 0034-6748

## Description

### BACKGROUND OF THE INVENTION

The present invention relates to a scanning near-field optic/atomic force microscope according to the preamble of claim 1.

Such a scanning near-field optic/atomic force microscope is for example known from: HULST VAN N F ET AL: "OPERATION OF A SCANNING NEAR FIELD OPTICAL MICROSCOPE IN REFLECTION IN COMBINATION WITH A SCANNING FORCE MICROSCOPE" SPIE, vol. 1639, 1992, pages 36-43, XP002921963.

Atomic force microscopes (AFMs) are capable of accurately observing the topography of the surface of a sample, irrespective of whether the sample is conductive or not, in contrast with scanning tunneling microscopes (STMs) and, therefore, AFMs are widespread. Atomic force microscopy (AFM) is a measuring method utilizing the fact that a spring element supporting a measuring probe is deflected by an atomic force acting between a sample and the measuring probe.

In an attempt to measure the optical characteristics and the topography of a sample, a probe consisting of a light medium having a sharp front end was brought close to the sample to be investigated such that the distance between them was less than the wavelength of the light. Also, some near-field optical microscopes have been proposed. In one of these instruments, laser light is directed from the rear side of a sample such that the light is totally reflected by the rear surface of the sample. Evanescent light leaking from the front surface of the sample is detected by bringing the front end of an optical fiber probe close to the surface of the sample, the probe being equipped with a fine-motion mechanism. Variations in the intensity of the evanescent light are measured by scanning the probe so as to detect predetermined evanescent light or by scanning the probe horizontally so as to detect the absolute value of the evanescent light. In this way, the topography of the surface is observed.

In another proposed apparatus, the front end of an optical fiber probe is held vertical to a sample. The front end is vibrated horizontally over the surface of the sample to produce friction between the sample surface and the front end of the probe, thus resulting in vibrations. Variations in the amplitude of the vibrations are detected as deviations of the optical axis of laser light which is emitted from the front end of the optical fiber and transmitted through the sample. A fine-motion mechanism is actuated to move the sample so that the distance between the front end of the probe and the sample surface is maintained constant. The surface topography is detected from the intensity of the signal applied to the fine-motion mechanism. Also, the transmissivity of the sample for the light is measured.

In a further proposed apparatus, a glass capillary having a hook-shaped front end portion is used. A fluorescent material is loaded into the tip portion of the capillary. A reflecting sheet for optically detecting deflections of the probe is installed on the rear side of the capillary, i.e., on the opposite side of the front end of the hook-shaped portion. Light is emitted from the back side of the sample and transmitted through the sample. This causes the fluorescent material at the front end of the probe close to the sample to emit light, which is transmitted through the sample. This light is detected at the rear surface of the sample. In this way, the surface topography of the sample is investigated by atomic force microscopy (AFM). At the same time, the transmissivity of the sample is measured by near-field optic microscopy.

A still other proposed apparatus uses a probe consisting of an electrically conductive optical medium as an STM probe. At the same time, the apparatus measures the optical characteristics of the sample.

The prior art AFM and STM techniques are adapted for observation of surface topography but are incapable of measuring the physical and chemical properties of a sample. A method of using light as a means for observing these properties of a sample is contemplated.

Some apparatuses of near-field optical microscopes using the above-described light use evanescent light. In such an apparatus, light intensity is used as information in the direction of height. Therefore, it is impossible to separate variations in the light intensity in the direction of height from light intensity variations due to absorption of light into a sample. Hence, it is difficult to use this apparatus as a means for measuring the physical and chemical properties of a sample. Where the sample surface is greatly uneven, light may not be totally reflected by the rear surface of the sample but be transmitted through it. Transmitted light rays may interfere with each other on the surface of the sample, thus hindering measurements.

In the case of an apparatus where a probe is vibrated horizontally, it is necessary that the sample be a substance which transmits light. In addition, the front end of the probe vibrates horizontally. Therefore, where the sample surface is greatly uneven, limitations are imposed on improvements of the horizontal resolution.

In the case of an apparatus using a capillary, it is necessary that the sample transmit light. Also, the measurable wavelength of the light may be restricted by the used fluorescent material.

Where the apparatus is combined with an STM, measurable samples are limited to conductive ones.

### SUMMARY OF THE INVENTION

It is an object of the present invention to realize an apparatus capable of measuring the topography of the surface of a sample and the optical characteristics of the sample at high resolution, irrespective of whether the sample transmits light or whether the sample is conductive.

This object is achieved by a scanning near-field optic/atomic force microscope according to claim 1.

In order to realize the above-described object according to the present invention, a probe comprising a light-propagating medium having an end portion provided with an optical opening that passes light is fabricated by thin-film micro-fabrication technology and disposed at one end of a cantilever, the optical opening portion forming a sharp front end portion. This cantilever is coated with a reflective or shielding coating at least except for the opening in the probe. If necessary, a dichroic mirror for wavelength-separating signal light for measuring properties of the sample and signal light for detecting a deflection of the cantilever is disposed on the back surface of the probe.

Furthermore, a light-transmitting device comprising a light-propagating medium is disposed in such a way that the light-transmitting surface is close to the back surface of the probe. The light-propagating medium has an optical opening for passing light in an end portion. The optical opening portion is a flat or concave surface. This light-transmitting device acts to introduce light into the probe and to direct light to the sample from the front end of the probe or to transmit light from the sample received at the front end of the probe to a photoelectric converter device.

The above-described deflection-detecting means comprises a laser light source for generating a laser light for use of deflection-detection, a condenser lens for directing laser light to the back surface of the cantilever, and a photoelectric converter device and optics for detecting reflected light from the back surface of the cantilever. The optical axis of the laser light passes between an end surface of the light-transmitting device and the probe or passes by the light-transmitting device.

The above-described deflection-detecting means comprises an interferometer including a laser light source, a beam splitter for separating and combining measured light and reference light, a light-transmitting device and a photoelectric converter device and optics for detecting the reflected light, and a dichroic mirror for wavelength-separating signal light for measuring properties of the sample and signal light for detecting of a deflection of the cantilever.

In the above-described structure of the scanning near-field optic/atomic force microscope, a cantilever having a probe consisting of a light-propagating medium fabricated by thin-film micro-fabrication technology is used as the cantilever of an AFM. The reflective or shielding film that covers the probe except for the opening at the front end acts to avoid the effects of unwanted scattering light entering into the probe from a portion other than the measured portion. Where light is directed to the sample from the probe, the film serves to focus the light spot onto the sample surface. The dichroic mirror installed on the rear surface of the probe acts to wavelength-separate signal light for measuring properties of the sample and signal light for detection of a deflection of the cantilever. The dichroic mirror transmits the signal light for measuring properties of the sample and reflects the signal light for detection of the deflection of the cantilever.

The light-transmitting device which is installed close to the back surface of the probe and whose optical opening portion is a flat or convex surface acts to introduce light into the probe and to direct light to the sample from the front end of the probe or to transmit light from the sample received at the front end of the probe to a photoelectric converter device.

The deflection-detecting means, comprising a laser light source, a condenser lens for directing the laser light to the back surface of a cantilever, and a detection system for detecting the reflected light, is so constructed that the optical axis of the laser light passes between an end surface of the light-transmitting device and the probe or passes by the side of the light-transmitting device. Consequently, deflection of the cantilever can be detected from a deviation of the position of the reflected light without being obstructed by the light-transmitting device.

The deflection-detecting means comprising, an interferometer including a laser light source, a beam splitter for separating and combining measured light and reference light, a light-transmitting device and a detection system, and a dichroic mirror for wavelength-separating signal light for measuring properties of the sample and signal light for detecting of a deflection of the cantilever, can detect deflection of the cantilever by making use of interference of light waves.

An apparatus for measuring light transmitted through a sample can adopt an operation in which light from a light source is directly transmitted through the inner surface of the sample, an operation in which light is totally reflected by the inner surface of the sample and leaking evanescent light is measured, and an operation in which light is introduced into the probe and then light is directed to the sample from the front end of the probe. In any operation, the transmissivity, absorbance, or fluorescent characteristics of the sample can be measured.

In the apparatus for measuring light reflected from the sample, light is introduced into the probe, and light is directed to the sample from the front end of the sample. Alternatively, light is directly directed to the surface of the sample, and reflected light is detected at the front end of the probe.

In the case of transmitted light, transmissivity, absorbance, and fluorescence can be measured. In the case of reflected light, the apparatus is adapted for measurement of the absorbance of the sample surface, reflectivity, and fluorescence.

With respect to the vibration means for producing vertical vibrations relatively between the front end of the probe and the sample, when the probe was scanned horizontally, this means can prevent damage of the surface of the sample and the front end of the probe that might be resulted by a lateral stress between the sample and the front end of the probe, because the sample and the front end of the probe would make contact with each other in response to unevenness of the sample.

### BRIEF DESCRIPTION OF THE DRAWINGS

Fig. 1 is a view showing the structure of a scanning near-field optic/atomic force microscope according to a first embodiment of the invention, showing the structure for detecting light transmitted through a sample with a probe;
Fig. 2 is a view showing the structure of a part of a scanning near-field optic/atomic force microscope according to a second embodiment of the invention, showing the optical system portion of an apparatus for detecting evanescent light;
Fig. 3 is a view showing the structure of a part of a scanning near-field optic/atomic force microscope according to a third embodiment of the invention, showing the optical system portion of an apparatus for emitting light from a probe to detect transmitted light;
Fig. 4 is a view showing the structure of a part of a scanning near-field optic/atomic force microscope according to a fourth embodiment of the invention, showing the optical system portion of an apparatus in which a probe is used for both projected light and received light;
Fig. 5 is a view showing the structure of a part of a scanning near-field optic/atomic force microscope according to a fifth embodiment of the invention, showing the optical system portion of an apparatus in which deflection of a cantilever is detected by an interferometer;
Fig. 6 is a schematic of a cantilever portion, showing an embodiment of the invention; and
Fig. 7 is a perspective view of a cantilever portion, showing an embodiment of the invention.

### DETAILED DESCRIPTION OF THE PREFERRED EMBODIMENTS

Embodiments of the present invention are hereinafter described by referring to the drawings.

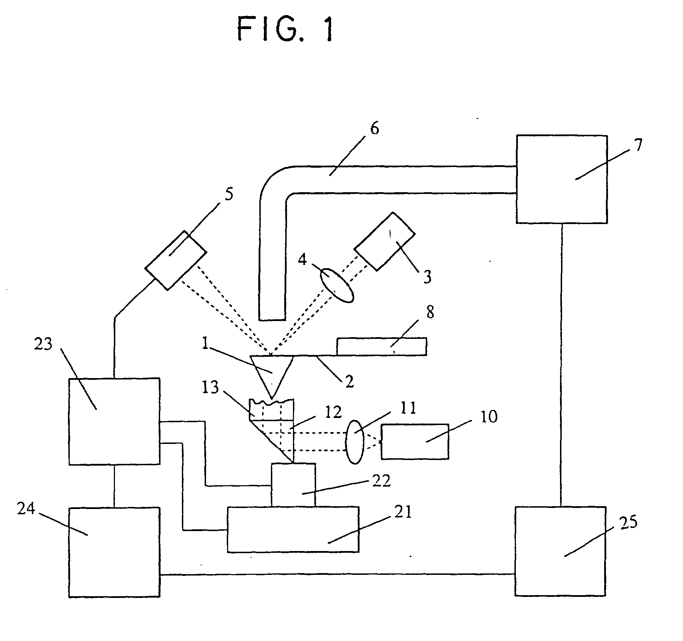

Fig. 1 shows the structure of a scanning near-field optic/atomic force microscope according to a first embodiment of the present invention, showing a structure in which light transmitted through a sample is detected with a probe. A cantilever 2 has the probe 1, installed on a bimorph 8. A laser light source 3, a condenser lens 4, and a photoelectric converter device 5 are installed above the cantilever 2. The laser light from the laser light source 3 is focused onto the back surface of the cantilever 2 by the condenser lens 4, and the reflected light is introduced into the photoelectric converter device 5. The light emitted by a light source 10 for measurement of optical information is directed to a sample 13 from its rear surface via a collimator lens 11, the sample 13 being placed on a prism 12. The inclined surface of the prism 12 is so processed that it totally reflects incident light. Light is introduced into the front end of the probe 1 close to the sample 13 and admitted into a photoelectric converter device 7 via a light-transmitting device 6. The prism 12 and the sample 13 are placed on a rough-motion mechanism 21 and on a fine-motion mechanism 22 which are capable of moving in three dimensions. A signal detected by the photoelectric converter device 5 is sent to a servo-mechanism 23. In response to this signal, the servo-mechanism 23 controls the rough-motion mechanism 21 and the fine-motion mechanism 22 when the probe is moved toward the sample or when the surface is observed. The servo-mechanism produces such an output signal that deflection of the probe does not exceed a predetermined value. A computer 24 is connected with the servo-mechanism 23 to control operation of the fine-motion mechanism 22 along a horizontal plane, and receives information about the topography from the control signal from the servo-mechanism. When light from the light source 10 is modulated or when vibrations are produced between the probe and the sample, the signal from the photoelectric converter device 7 is coupled to the analog input interface of the computer 24 via a lock-in amplifier 25. When the light is not modulated, the signal is directly coupled to the analog input interface of the computer 24. The computer 24 detects optical information from the signal synchronized with two-dimensional operation of the fine-motion mechanism 22.

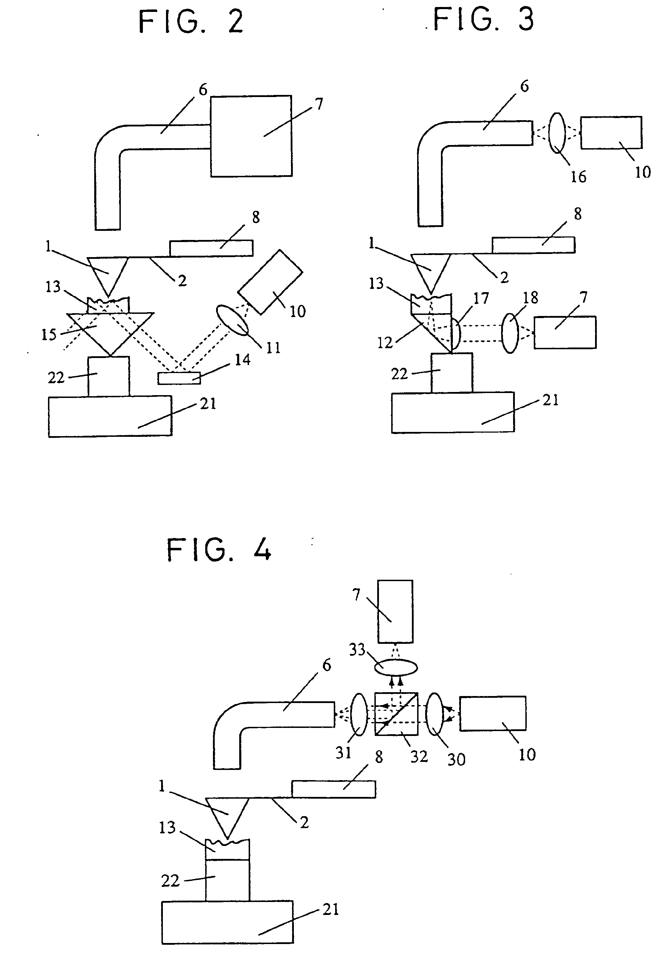

Fig. 2 is a view showing the structure of a part of a scanning near-field optic/atomic force microscope according to a second embodiment of the present invention, showing the optical system portion of an apparatus for detecting evanescent light. Light emanating from a light source 10 for measurement of optical information is directed via a collimator lens 11 and a mirror 14 to a prism 15 at such an angle that the light is totally reflected off the rear surface of a sample 13 placed on the prism 15 whose inclined surface faces upward. Evanescent light leaking from the sample surface at this time is introduced into the front end of a probe 1 close to the sample 13, and is introduced into a photoelectric converter device 7 via a light-transmitting device 6. The prism 15 and the sample 13 are placed on a rough-motion mechanism 21 and on a fine-motion mechanism 22 which are capable of moving in three dimensions.

When the apparatus is so modified that the light from the light source 10 for measurement of optical information is directly directed on the surface of the sample 13, light reflected by the sample 13 may be introduced into the front end of the probe 1 close to the sample. The light may then be introduced into the photoelectric converter device 7 via the light-transmitting device 6.

Fig. 3 is a view showing the structure of a part of a scanning near-field optic/atomic force microscope according to a third embodiment of the present invention, showing the optical system portion of an apparatus in which light is emitted from a probe and the transmitted light is detected. Light emitted from a light source 10 for measurement of optical information is introduced into a light-transmitting device 6 by a condenser lens 16 and transmitted to a probe 1. The light is then directed to the surface of a sample 13 from the front end of a probe 1 placed close to the sample 13, which is placed on a prism 12. The inclined surface of the prism 12 is so coated that it totally reflects incident light. Light reflected by the inner surface of the inclined surface of the prism 12 is collimated by a lens 17 and introduced into the photoelectric converter device 7 by a lens 18. The prism 12 and the sample 13 are placed on a rough-motion mechanism 21 and on a fine-motion mechanism 22 which are capable of moving in three dimensions.

Also, the apparatus is so modified that light reflected by the sample 13 is gathered and introduced into the photoelectric converter device 7. Light is emitted from the probe 1 to the sample 13. The reflected light is detected.

Fig. 4 is a view showing the structure of a part of a scanning near-field optic/atomic force microscope according to a fourth embodiment of the present invention, showing the optical system portion of a reflected light-measuring apparatus in which a probe is used for both projected light and received light. Light emitted from a light source 10 is collimated by a lens 30 and transmitted through a beam splitter 32. Then, the light is collected by a lens 31 and introduced into a light-transmitting device 6. Light transmitted to the probe 1 by the light-transmitting device 6 is directed to the surface of the sample 13 from the front end of the probe 1 close to the sample 13. Light reflected by the sample 13 is again introduced into the front end of the probe 1 and is emanated via the light-transmitting device 6 and collimated by the lens 31. The light is then reflected at 90° by the beam splitter 32. The reflected component of the laser light is introduced into the photoelectric converter device 7 by a lens 33. The sample 13 is placed on a rough-motion mechanism 21 and on a fine-motion mechanism 22 which are able to move in three dimensions.

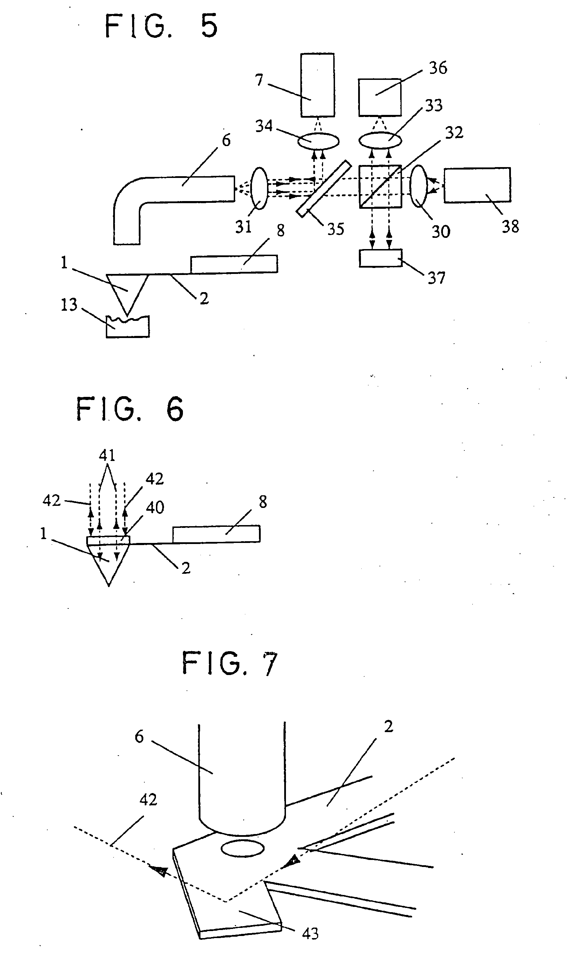

Fig. 5 is a view showing the structure of a part of a scanning near-field optic/atomic force microscope according to a fifth embodiment of the present invention, showing the optical system portion of an apparatus using an interferometer for detecting deflection of a cantilever. Laser light emitted by a single-wavelength stabilized laser 38 is collimated by a lens 30. The component transmitted through a beam splitter 32 is transmitted through a dichroic mirror 35 and collected by a lens 31. The light is then introduced into a light-transmitting device 6, reflected by the back surface of a cantilever 2, and again introduced into the light-transmitting device 6. The light is collimated by the lens 31, transmitted through the dichroic mirror 35, and reflected at 90° by the beam splitter 32. Meanwhile, the component of the laser light which is emitted by the single-wavelength stabilized laser 38 and is reflected by the beam splitter 32 is reflected by a reference mirror 37 and combined with light reflected from the back surface of the cantilever 2 by the beam splitter 32. The combined light is collected by a lens 33 and detected as an interfering light wave signal by a photoelectric converter device 36. Optical information created by reflection from the sample 13, transmission through it, and total reflection from the rear surface of it are detected at the front end of the probe 1. The light is then collimated by the lens 31 via the light-transmitting device 6, reflected at 90° by the dichroic mirror 35, collected by a lens 34, and introduced into a photoelectric converter device 7. If the wavelength of the signal light from the interferometer is sufficiently separated from the wavelength of the sample light, the dichroic mirror 35 can divide each kind of light into transmission and reflection in terms of wavelength.

In the embodiment shown in Fig. 5, if the photoelectric converter device 7 is replaced by a light source 10 for measurement of optical information, then the structure is such that light is emitted from the front end of the probe 1 described in the example of Fig. 3. If the light-emitting optical system for measurement of optical information is omitted, and if a semitransparent mirror is mounted on the back surface of the cantilever 2, then the laser light from the laser 38 that is the light source for the interferometer can also be used as the light used for measurement of optical information. That is, the light for detection of deflection of the cantilever 2 can also be used as the light directed to the sample 13.

In the embodiment shown in Fig. 5, if a beam splitter is installed between the dichroic mirror 35 and the lens 34, and if a light source for measurement of optical information and a photoelectric converter device are installed on the reflected light path and on the transmitted light path, respectively, then the probe 1 described in the embodiment of Fig. 4 can be used for both projected light and received light.

In the apparatuses described thus far, the cantilever 2 having the probe 1 is fabricated by thin-film microfabrication technology. The material of the cantilever can be oxide film such as silicon oxide or silicon nitride, transparent conductive film such as ITO or tin oxide, and other materials transmitting light. Especially, where a transparent conductive film is used, a tunneling current can be detected during operation. Also, an STS (scanning tunneling spectroscopy) measurement can be made. The probe 1 is coated with a metal film made of nickel, chromium, or gold except for an opening at the front end of the probe. Where such a film is formed, if light is introduced into the probe, light noise from side surfaces can be eliminated. If light is directed from the probe, the directivity of the illuminating light can be enhanced. Sputtering, vapor deposition, electroless plating, or other method can be used as a method of depositing the metal film. Usually, the probe is coated with a reflective film up to the opening. To remove the coating over the opening, etching using a strong acid can be utilized. Alternatively, during operation of AFM, the contact pressure is increased to mechanically remove the coating.

An optical fiber whose end surface is polished so as to be flat or convex is used as the light-transmitting device 6. The dichroic mirror 35 is a so-called dielectric multilayer mirror. By selecting an appropriate one, light can be efficiently separated into transmission and reflection if two wavelengths are spaced more than tens of nanometers. A photomultiplier, a photodiode, a photodiode array, or a CCD image sensor can be used as the photoelectric converter device 7. If necessary, a spectral element such as an optical filter or diffraction grating can be disposed as an optical system located before the photoelectric converter device 7. In this case, wavelength information can be observed. The light source 10 can consist of a semiconductor laser, a He-Ne laser, an Ar laser, a nitrogen laser, a YAG laser, other laser, or a conventional white light source or a monochromator. Where the detected light is quite weak as encountered where evanescent light is measured, it is necessary that the light emitted by the light source be modulated and that the synchronized component be taken from the detector output to remove noise. In the case of a semiconductor laser, electrical current flowing through the laser element is controlled by pulses. In this way, the light can be modulated.

Where other light source is used, the light can be modulated by the use of a mechanical light chopper, an EO modulator (electrooptic modulator), or an AO modulator (acoustooptic modulator). Where vibrations are produced between the probe and the sample, these vibrations produce the same effect as modulation. A piezoelectric ceramic cylinder having a length of 100 mm, an outside diameter of 10 mm, and a wall thickness of 1 mm is used as the fine-motion mechanism 22. This fine-motion device moves 150 µm in X- and Y-directions and 5 µm in the Z-direction. The means for producing vibrations between the probe and the sample can be a structure comprising a piezoelectric device for vibrating the cantilever. The vibrations can also be produced by Z-direction motion of the fine-motion mechanism 22. A bimorph for vibrating the sample in the Z-direction can be added to the fine-motion mechanism 22.

Fig. 6 is a schematic of the cantilever portion, showing an embodiment of the present invention. A dichroic mirror 40 is installed on the cantilever 2. Where the wavelength of light for detecting deflection of the cantilever is sufficiently separated from the wavelength of sample light, the dichroic mirror 40 efficiently reflects a detection light 42 for detecting deflection of the cantilever by means of the back surface of the cantilever. Optical information from the sample or a reference light 41 irradiating the sample is efficiently transmitted to or from the cantilever. The dichroic mirror 40 can be fabricated simultaneously by thin-film microfabrication technology during fabrication of the cantilever 2.

Fig. 7 a perspective view of the cantilever portion, showing an embodiment of the present invention. The detection light 42 for detecting deflection of the cantilever 2 passes by the light-transmitting device 6 and is reflected by an overhang portion 43 formed on the cantilever 2. In this structure, deflection of the cantilever 2 can be detected from the deviation of the position of the light reflected by the cantilever 2 without being hindered by the light-transmitting device 6. The overhang portion 43 can be fabricated as a part of the shape of the cantilever 2 during fabrication of the cantilever 2.

In the apparatus built in this way, where transmitted light was to be measured, two-dimensional information about transmittance, absorbance, and fluorescent light could be measured simultaneously with observation of an AFM image. We have found that where reflected light is measured, the apparatus is suited for measurements of the transmittance, absorbance of the sample surface and of fluorescent light from the surface. Resolutions of 10 nm could be achieved in obtaining AFM image and two-dimensional optical information.

Since the probe is fabricated by thin-film micro-fabrication technology in the same way as ordinary probe for AFM, the novel probe is excellent in shape accuracy and reproducibility and well suited for mass production. Because the probe is small, it is immune to external disturbance such as vibrations. Where the probe uses a transparent conductive film, a tunneling current can be detected, as well as shape information and optical information. In addition, optical information can be detected during STM operation.

In the present embodiment, the probe is fixed, and the operating means is mounted on the side of the sample. It is also possible to build an apparatus in which an operating means is mounted on the side of the probe, and in which a sample is fixed.

As described thus far, according to the novel scanning near-field optic/atomic force microscope of the present invention, an apparatus can be accomplished which is capable of measuring the surface topography and optical characteristics of a sample at high resolution , irrespective of whether the sample transmits light or whether it is conductive.

Especially, the probe is fabricated by thin-film micro-fabrication technology in the same way as ordinary AFM. The probe is excellent in shape accuracy and shape reproducibility and well suited for mass production. Since the probe is small, it is less affected by external disturbance such as vibrations. Hence, the performance can be improved.

## Claims

1. A scanning near-field optic/atomic force microscope adapted to observe topography and optical characteristics of a sample (13), said microscope comprising:
a cantilever (2) having a probe (1) in an end portion thereof, the probe consisting primarily of a light-propagating medium having an optical opening for passing light, said optical opening forming a sharp front end;
a light-transmitting device (6) having a light-transmitting optical opening in both ends thereof, wherein one of said ends of said light-transmitting device is disposed close to a back surface of said probe (1);
a light source (10) and optics (11, 12) for generating a light to measure a feature of the sample (13) and for directing generated light to the sample (13);
a photoelectric converter device (7) and optics for receiving light from the sample (13);
a deflection-detecting means for optically detecting deflection of said cantilever (2), comprising a light source (3) for generating a laser light for use of deflection-detection; a condenser lens (4) for directing the laser light to a back surface of said cantilever (2); and another photoelectric converter device (5) and optics for detecting reflected light from back surface of said cantilever (2);
a motion mechanism (21, 22) for making a relative movement between the sample and said probe; and
a gap control means (23) for controlling a distance between the surface of the sample (13) and the sharp front end of said probe (1),
**characterized in**
**that** the cantilever (2) comprises an overhang portion (43) which overhangs from an end portion thereof; and
**that** the condenser lens (4) directs the laser light to said overhang portion (43) which is located spaced apart from a region of the probe through which light of the light-transmitting device (6) passes through, so that deflection of the cantilever (2) can be detected from the deviation of the position of the light reflected by the overhang portion of the cantilever (2) without being hindered by the light-transmitting device (6).

2. A scanning near-field optic/atomic force microscope according to claim 1, wherein an optical axis of said laser light for use of deflection-detection passes by a side of said light-transmitting device (6).

3. A scanning near-field optic/atomic force microscope according to claim 1 or 2, wherein a vibration means (8) is provided for producing vertical vibrations relatively between the sharp front end of said probe (1) and the sample (13).

4. A scanning near-field optic/atomic force microscope according to claim 3, wherein said cantilever (2) is coated with an optically shielding coating except for the optical opening of said probe (1).

## Patentansprüche

1. Ein optisches Nahfeld-Rastermikroskop/atomares Kraftmikroskop, das zum Beobachten der Topographie und optischen Merkmale einer Probe (13) eingerichtet ist, wobei das Mikroskop umfasst:
einen Ausleger (2) mit einer Sonde (1) in einem Endteil desselben, wobei die Sonde aus einem Licht leitendem Medium mit einer optischen Öffnung zum Durchlassen von Licht besteht, wobei die optische Öffnung ein scharfes Frontende bildet;
eine Licht übertragende Vorrichtung (6) mit einer Licht übertragenden optischen Öffnung in ihren beiden Enden, wobei eines dieser Enden der Licht übertragenden Vorrichtung nahe an einer Rückseite der Sonde (1) angeordnet ist;
eine Lichtquelle (10) und Optikteile (11, 12) zum Erzeugen von Licht, um ein Merkmal der Probe (13) zu messen und um das erzeugte Licht auf die Probe (13) zu lenken;
eine photoelektrische Wandlervorrichtung (7) und optische Teile zum Empfangen von Licht von der Probe (13);
Durchbiegungserfassungsmittel zum optischen Erfassen der Durchbiegung des Auslegers (2), welcher eine Lichtquelle (3) zum Erzeugen von Laserlicht zur Verwendung bei der Erfassung der Durchbiegung umfasst;
eine Kondensorlinse (4) zum Ausrichten des Laserlichts auf eine Rückseite des Auslegers (2); und
eine weitere photoelektrische Wandlervorrichtung (5) und Optikteile zum Erfassen des an der Rückseite des Auslegers (2) reflektierten Lichts;
einen Bewegungsmechanismus (21, 22) zum Ausführen einer relativen Bewegung zwischen der Probe und der Sonde; und
ein Spaltsteuermittel (23) zum Einstellen eines Abstands zwischen der Oberfläche der Probe (13) und dem scharfen Frontende der Sonde (1),
**dadurch gekennzeichnet, dass**
der Ausleger (2) einen überstehenden Bereich (43) umfasst, welcher von einem Endbereich hiervon übersteht; und dass
die Kondensorlinse (4) das Laserlicht auf den überstehenden Teil (43) richtet, welcher beanstandet von einem Bereich der Sonde angebracht ist, durch welchen das Licht der Licht übertragenden Vorrichtung (6) hindurch geht, sodass eine Durchbiegung des Auslegers (2) basierend auf der Änderung der Position des am überstehenden Teils des Auslegers (2) reflektierten Lichts erfasst werden kann, ohne dass eine Störung durch die Licht übertragende Vorrichtung erfolgen würde.

2. Optisches Nahfeld-Rastermikroskop/atomares Kraftmikroskop gemäß Anspruch 1, in dem eine optische Achse des Laserlichts zur Verwendung bei der Durchbiegungserfassung an einer Seite der Licht übertragenden Vorrichtung (6) vorbeiführt.

3. Optisches Nahfeld-Rastermikroskop/atomares Kraftmikroskop nach Anspruch 1 oder 2, wobei ein Schwingungsmittel (8) zum Erzeugen von vertikalen Schwingungen zwischen dem scharfen Frontende der Sonde (1) und der Probe (13) bereitgestellt wird.

4. Optisches Nahfeld-Rastermikroskop/atomares Kraftmikroskop gemäß Anspruch 3, wobei der Ausleger (2) außer bei der optischen Öffnung der Sonde (1) mit einer optisch abschirmenden Beschichtung beschichtet ist.

## Revendications

1. Microscope optique de champ proche/à force atomique à balayage conçu pour observer la topographie et des caractéristiques optiques d'un échantillon (13), ledit microscope comprenant :
un porte-à-faux (2) comportant une sonde (1) dans une partie d'extrémité de celui-ci, la sonde consistant principalement en un milieu propageant la lumière comportant une ouverture optique destinée à laisser passer la lumière, ladite ouverture optique formant une extrémité avant pointue,
un dispositif de transmission de lumière (6) comportant une ouverture optique transmettant la lumière aux deux extrémités de celui-ci, dans lequel l'une desdites extrémités dudit dispositif de transmission de lumière est disposée à proximité d'une face arrière de ladite sonde (1),
une source de lumière (10) et des éléments optiques (11, 12) destinés à générer une lumière afin de mesurer une caractéristique de l'échantillon (13) et d'orienter la lumière générée vers l'échantillon (13),
un dispositif de convertisseur photoélectrique (7) et des éléments optiques destinés à recevoir la lumière provenant de l'échantillon (13),
un moyen de détection de déviation destiné à détecter de façon optique la déviation dudit porte-à-faux (2), comportant une source de lumière (3) destinée à générer une lumière laser à utiliser pour la détection de la déviation ;
un condensateur (4) pour orienter la lumière laser vers une face arrière dudit porte-à-faux (2) ; et
un autre dispositif de convertisseur photoélectrique (5) et des éléments optiques pour détecter la lumière réfléchie à partir de la face arrière dudit porte-à-faux (2) ;
un mécanisme de déplacement (21, 22) destiné à réaliser un déplacement relatif entre l'échantillon et ladite sonde ; et
un moyen de commande d'intervalle (23) destiné à commander une distance entre la surface de l'échantillon (13) et l'extrémité avant pointue de ladite sonde (1),
**caractérisé en ce que**
le porte-à-faux (2) comporte une partie en surplomb (43) qui surplombe à partir d'une partie d'extrémité de celui-ci ; et
que le condensateur (4) oriente la lumière laser vers ladite partie en surplomb (43) qui est logée de manière espacée par rapport à la zone de la sonde que traverse la lumière provenant du dispositif de transmission de lumière (6) de sorte qu'une déviation du porte-à-faux (2) peut être détectée à partir de la déviation de la position de la lumière réfléchie par la partie en surplomb du porte-à-faux (2) sans être empêchée par le dispositif de transmission de lumière (6).

2. Microscope optique de champ proche/à force atomique à balayage selon la revendication 1, dans lequel un axe optique de ladite lumière laser à utiliser pour la détection de la déviation passe le long d'un côté du dispositif de transmission de lumière (6).

3. Microscope optique de champ proche/à force atomique à balayage selon les revendications 1 ou 2, dans lequel un moyen de vibration (8) destiné à produire des vibrations verticales relatives entre l'extrémité avant pointue de ladite sonde (1) et l'échantillon (13) est prévu.

4. Microscope optique de champ proche/à force atomique à balayage selon la revendication 3, dans lequel ledit porte-à-faux (2) est revêtu d'un revêtement de blindage optique sauf à l'ouverture optique de ladite sonde (1).
